# EUROPEAN PATENT APPLICATION

(11) **EP 4 209 668 A1**
(43) Date of publication of application: **12.07.2023**
(21) Application number: 23150778.1
(22) Date of filing: 09.01.2023
(51) Int. Cl.: F02C 7/236, F02K 3/10

(54) **AIRCRAFT FUEL SYSTEMS WITH ELECTRIC MOTOR DRIVEN AUGMENTOR PUMPS**

(30) Priority: 07.01.2022 US 202217570691
(71) Applicant: Hamilton Sundstrand Corporation, Charlotte, NC 28217-4578 (US)
(72) Inventor: GOY, Edward W., Crystal Lake, IL (US)
(74) Representative: Dehns

(57) **Abstract**

A fuel system for a gas turbine engine includes an augmentor pump (102) having an inlet (104) communicating with a fuel supply source and a discharge (106) communicating with an augmentation stage of the engine. An electric motor (108) is operatively connected to drive the augmentor pump for selectively activating and deactivating the augmentor pump.

## Description

### BACKGROUND OF THE DISCLOSURE

### 1. Field of the Disclosure

The subject disclosure is directed to a fuel system for aircraft, and more particularly, to a fuel supply system for aircraft that includes an augmentor pump.

### 2. Description of Related Art

Afterburners or thrust augmentors are known in the art for increasing the thrust output of a gas turbine engine during flight operations. Additional thrust is produced within an augmentor when oxygen contained within the core gas flow of the engine is mixed with fuel and burned.

Current augmentor fuel pumping systems are driven off the engine gearbox and require inlet shutoff valves, which provide restrictions at the inlet of the pumping element that limit suction capabilities. Additionally, the pump element will continue to rotate even when it is dry, which can lead to unnecessary wear over time. Boost pumps are typically sized to provide flow to the main stage and the augmentor stage, and thus provide excess pressure and flow when the augmentor pump is off.

While the traditional fuel systems are considered adequate for their intended purposes, there is a need for improved performance and operability. This disclosure provides for this need.

### SUMMARY

A fuel system for a gas turbine engine includes an augmentor pump having an inlet communicating with a fuel supply source and a discharge communicating with an augmentation stage of the engine. An electric motor is operatively connected to drive the augmentor pump for selectively activating and deactivating the augmentor pump.

The augmentor pump can be a centrifugal pump. The fuel supply source can be a boost pump drawing fuel from a fuel storage system. A shut off valve can be included in a fuel line connecting the boost pump to the inlet of the augmentor pump. The fuel supply source can be a direct connection to a fuel storage system without requiring any other intervening pumps. A fuel line connecting the fuel storage system to an inlet of the augmentor pump can be free of shut off valves.

An accessory gear box can be operatively connected to the engine to receive rotational power input form the engine and to output rotational power output to engine accessories. The electric motor can be remote from the accessory gear box.

A controller can be operatively connected to control the electric motor for binary on/off control of the augmentor pump. It is also contemplated that a controller can be operatively connected to control the electric motor for variable power control of the augmentor pump. A check valve can be operatively associated with the discharge of the augmentor pump.

A method includes powering an electric motor to drive an augmentor pump to supply fuel to an augmentor in a gas turbine engine.

The method can include supplying fuel to a main combustor of the gas turbine engine with a boost pump. Powering the electric motor to drive the augmentor pump can include powering the electric motor on, off, and/or to different power levels independent of at what speed the boost pump is operating. The method can include supplying fuel to the augmentor pump from the boost pump and closing a shutoff valve downstream of the boost pump and upstream of the augmentor pump when powering down the electric motor.

Driving the augmentor pump can include suctioning fuel directly from a fuel storage system to the augmentor pump without any intervening pumps between the fuel storage system and the augmentor pump. The method can include preventing flow from the augmentor pump to the augmentor with a check valve downstream of the augmentor pump and upstream of the augmentor when the electric motor is powered off.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing an augmentor pump powered by an electric motor, wherein the augmentor pump can suction directly from a fuel storage system; and
Fig. 2 is a schematic view of the system of Fig. 1, showing the boost pump connected to supply fuel to the inlet of the augmentor pump.

### DETAILED DESCRIPTION OF THE PREFERRED EMBODIMENTS

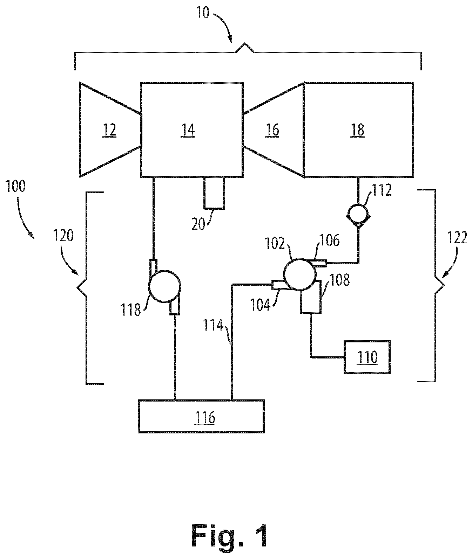

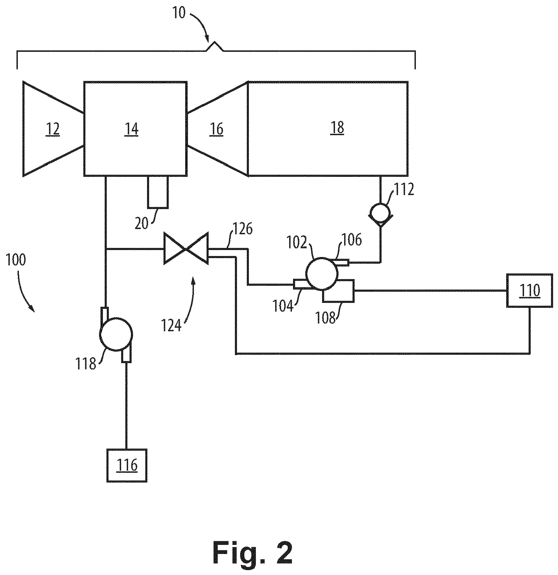

Reference will now be made to the drawings wherein like reference numerals identify similar structural features or aspects of the subject disclosure. For purposes of explanation and illustration, and not limitation, a partial view of an embodiment of a fuel system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to provide independent powering of an augmentor pump.

In a gas turbine engine 10, a compressor section 12 supplies compressed air to a combustor section 14, which combusts fuel from the fuel system 100 in the compressed air. A turbine section 16 downstream from the combustor section 14 extracts rotational power from the combustion products from the compressor section 14. The augmentor or augmentor section 18 can be activated to boost aircraft power when needed. Turbine discharge gases from the turbine section 18 enter the augmentor section 18 still containing some uncombusted oxygen. To activate the augmentor section 18, fuel is injected from the fuel system 100, which fuel is combusted with the oxygen in the augmentor section 18.

The fuel system 100 for the gas turbine engine 10 includes an augmentor pump 102 having an inlet 104 in fluid communication with a fuel supply source and a discharge 106 in fluid communication with the augmentation stage 18. An electric motor 108 is operatively connected to drive the augmentor pump 102 for selectively activating and deactivating the augmentor pump 102, i.e. to selectively power the augmentor section 18. The augmentor pump 102 can be a centrifugal pump.

An accessory gear box 20 is operatively connected to the engine 10 to receive rotational power input form the engine 10 and to output rotational power output to engine accessories. The electric motor 108 can be physically remote from and operationally independent from the accessory gear box 20.

A controller 110 is operatively connected to control the electric motor. The controller 110 can be incorporated in the main controller of the engine 10, e.g. a full authority digital engine control (FADEC), or can be separate from the main controller of the engine 10. The controller can include machine readable instructions and/or circuitry for binary on/off control of the electric motor 108 and hence for the augmentor pump 102. It is also contemplated that the controller 110 can include machine readable instructions and/or circuity for variable power control of the augmentor pump, including on/off power levels as well as intermediate power levels. Hydromechanical means are not needed to control power levels in the augmentor pump 102. A check valve 112 is operatively associated with the discharge of the augmentor pump, i.e. is in the fuel line connecting the discharge 106 to the augmentor section 18 to prevent backflow from the augmentor section 18 into the augmentor pump 102 when the augmentor pump 102 is not rotating under power from the electric motor 108.

With continued reference to Fig. 1, the fuel supply source is a direct connection of a fuel line 114 to a fuel storage system 116 without any needing other intervening pumps. Even if there is a boost pump besides the main boost pump 118, e.g. a tank mounted boost pump of a fuel tank of the storage system 116, the augmentor pump 102 can draw from the fuel tank in the event of failure of the tank mounted boost pump. Note that the main combustor 14 is fed fuel by the main boost pump 118 (there may be additional pumps downstream of the boost pump 118) which pumps fuel from the fuel storage system 116 to the combustor section 14. The main boost pump 118 and the augmentor pump 102 operate independently from one another on completely separate fuel circuits 120/122. The fuel line 114 connecting the fuel storage system to an inlet of the augmentor pump is free of shut off valves. The augmentor pump 102 can suction fuel directly from the fuel storage system 116. This configuration allows for reduction in size of the main stage boost pump 118 relative to systems where the boost pump supplies the augmentor pump. The fuel storage system 116 can be a fuel tank, or multiple fuel tanks, for example.

With reference now to Fig. 2, instead of suctioning fuel directly from the fuel storage system 116, it is contemplated that the fuel supply source for the augmentor pump 102 can be the boost pump 118, which draws fuel from the fuel storage system 116. A shut off valve 124 is included in the fuel line 126 connecting the boost pump 118 to the inlet 104 of the augmentor pump 102, to prevent flow of fuel through the augmentor pump 102 when the electric motor is not powering rotation of the augmentor pump 102. The shutoff valve 124 is connected to be controlled by the controller 110, which can coordinate operation of the shutoff valve 124 and the electric motor 108.

With continued reference to Figs. 1 and 2, a method includes powering an electric motor, e.g. electric motor 108, to drive an augmentor pump, e.g. augmentor pump 102, to supply fuel to an augmentor, e.g. augmentor stage 18, in a gas turbine engine, e.g. gas turbine engine 10. The method can include supplying fuel to a main combustor, e.g. combustor section 14, of the gas turbine engine with a boost pump, e.g. boost pump 118. Powering the electric motor to drive the augmentor pump can includes powering the electric motor on, off, and/or to different power levels independent of at what speed the boost pump is operating. The method includes preventing flow from the augmentor pump to the augmentor with a check valve, e.g. check valve 112, downstream of the augmentor pump and upstream of the augmentor when the electric motor is powered off.

The method can include supplying fuel to the augmentor pump from the boost pump and closing a shutoff valve, e.g. shutoff valve 124 of Fig. 2, downstream of the boost pump and upstream of the augmentor pump when powering down the electric motor. Driving the augmentor pump can include suctioning fuel directly from a fuel storage system, e.g. fuel storage system 116 as shown in Fig. 1, to the augmentor pump without any intervening pumps between the fuel storage system and the augmentor pump.

Potential benefits of systems and methods as disclosed herein include the following. An augmentor pump can now be directly controlled for pressure by varying the speed of the electric motor. The augmentor pump can now be turned off when not needed to provide thermal benefits to the system. The main boost stage for the fuel system could be reduced in size by incorporating an inducer on the augmentor impeller which would be sized to provide suction capabilities from the fuel tank or tanks. A smaller boost stage can improve thermal input and weight.

The methods and systems of the present disclosure, as described above and shown in the drawings, provide for independently powering an augmentor pump in a gas turbine engine with an augmentor. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A fuel system for a gas turbine engine comprising:
an augmentor pump (102) having an inlet (104) configured to communicate, in use, with a fuel supply source and a discharge (106) configured to communicate, in use, with an augmentation stage (18) of the engine; and
an electric motor (108) operatively connected to drive the augmentor pump for selectively activating and deactivating the augmentor pump.

2. The fuel system of Claim 1, wherein the augmentor pump is a centrifugal pump.

3. The fuel system of Claim 1 or 2, wherein the fuel supply source is a boost pump drawing fuel from a fuel storage system.

4. The fuel system of Claim 3, further comprising a shut off valve (124) in a fuel line (114) connecting the boost pump to the inlet of the augmentor pump.

5. The fuel system of Claim 1, wherein the fuel supply source is a direct connection to a fuel storage system without requiring any other intervening pumps.

6. The fuel system of Claim 5, wherein a fuel line connecting the fuel storage system to an inlet of the augmentor pump is free of shut off valves.

7. The fuel system of any preceding Claim, further comprising an accessory gear box (20) operatively connected to the engine to receive rotational power input form the engine and to output rotational power output to engine accessories, wherein the electric motor is remote from the accessory gear box.

8. The fuel system of any preceding Claim, further comprising a controller (110) operatively connected to control the electric motor for binary on/off control of the augmentor pump.

9. The fuel system of any of Claims 1 to 7, further comprising a controller operatively connected to control the electric motor for variable power control of the augmentor pump.

10. The fuel system of any preceding Claim, wherein a check valve (112) is operatively associated with the discharge of the augmentor pump.

11. A method comprising:
powering an electric motor to drive an augmentor pump to supply fuel to an augmentor in a gas turbine engine.

12. The method as recited in claim 11, further comprising:
supplying fuel to a main combustor (14) of the gas turbine engine (10) with a boost pump (118), wherein powering the electric motor to drive the augmentor pump includes powering the electric motor on, off, and/or to different power levels independent of at what speed the boost pump is operating.

13. The method as recited in claim 12, further comprising:
supplying fuel to the augmentor pump from the boost pump; and
closing a shutoff valve (124) downstream of the boost pump and upstream of the augmentor pump when powering down the electric motor.

14. The method as recited in claim 11, wherein driving the augmentor pump includes suctioning fuel directly from a fuel storage system to the augmentor pump without any intervening pumps between the fuel storage system and the augmentor pump.

15. The method as recited in claim 14, further comprising: preventing flow from the augmentor pump to the augmentor with a check valve (112)downstream of the augmentor pump and upstream of the augmentor when the electric motor is powered off.
